# EUROPÄISCHE PATENTANMELDUNG

(11) **EP 4 613 414 A1**
(43) Veröffentlichungstag der Anmeldung: **10.09.2025**
(21) Anmeldenummer: 25151334.7
(22) Anmeldetag: 10.01.2025
(51) Int. Cl.: B23K 11/11, B23K 103/04

(54) **VERFAHREN ZUM WIDERSTANDSPUNKTSCHWEISSEN VON BAUTEILEN**

(30) Priorität: 07.03.2024 DE 102024202170
(71) Anmelder: VOLKSWAGEN AG, 38440 Wolfsburg (DE)
(72) Erfinder: Kiesow, Daniel, 38436 Wolfsburg (DE)

(57) **Zusammenfassung**

Die Erfindung betrifft ein Verfahren zum Widerstandspunktschweißen von Bauteilen (110, 120), bei dem
- in einem ersten Schritt an der Schweißstelle (S) mittels beidseitig der Bauteile (110, 120) angeordneter erster Elektroden (210) ein elektrischer Strom (I₁) durch die Bauteile (110, 120) geführt und dadurch eine Punktschweißverbindung (P) erzeugt wird; und
- in einem zweiten Schritt an derselben Schweißstelle (S) mittels beidseitig der Bauteile (110, 120) angeordneter zweiter Elektroden (220) ein elektrischer Strom (I₂) durch die Bauteile (110, 120) geführt und dadurch eine Wärmbehandlung vorgenommen wird.

## Beschreibung

Die Erfindung betrifft ein Verfahren zum Widerstandspunktschweißen von Bauteilen gemäß Patentanspruch 1.

Beim Widerstandspunktschweißen werden die zu verschweißenden Bauteile an einer Schweiß- bzw. Verbindungsstelle mit Elektroden mehr oder weniger stark zusammengedrückt und durch einen über die Elektroden geführten elektrischen Strom bis zum Aufschmelzen erhitzt. Nach Beendigung des Stromflusses bildet sich an der Schweißstelle eine punktförmige Schweißverbindung aus, die auch als Punktschweißverbindung oder kurz Schweißpunkt bezeichnet wird.

In der DE 10 2012 018 098 A1 ist ein Verfahren zum Widerstandsschweißen von Bauteilen beschrieben, bei dem die Bauteile mittels eines über die Elektroden geführten Schweißstroms unter Ausbildung einer Schweißlinse miteinander verschweißt werden. Der Schweißstrom weist einen veränderlichen Zeitverlauf auf, der sich durch abwechselnde hochstromige Bestromungsphasen und niederstromige oder stromfreie Abkühl- und Verfestigungsphasen auszeichnet, wodurch eine Schweißlinse aus mehreren ineinander geschichteten und/oder nebeneinanderliegenden Schmelzenbereichen ausgebildet wird. Mit diesem Verfahren erweist sich vor allem das Widerstandsschweißen von pressgehärteten Blechformteilen (mit einem martensitischen Gefüge) als sehr vorteilhaft, da eine Schweißverbindung mit hoher Festigkeit und guter Duktilität (Dehnungseigenschaften) hergestellt werden kann.

Der Erfindung liegt die Aufgabe zugrunde, ein weiteres Verfahren zum Widerstandspunktschweißen anzugeben, mit dem hohe Verbindungsfestigkeiten erreichbar sind.

Die Aufgabe wird gelöst durch das erfindungsgemäße Verfahren mit den Merkmalen des Patentanspruchs 1. Vorteilhafte Weiterbildungen und Ausgestaltungen des erfindungsgemäßen Verfahrens ergeben sich aus den abhängigen Patentansprüchen, der nachfolgenden Erfindungsbeschreibung (dies schließt ausdrücklich auch beispielhaft und optional beschriebene Merkmale ein) und den Figuren.

Das erfindungsgemäße Verfahren zum Widerstandspunktschweißen von Bauteilen, womit wenigstens zwei Bauteile gemeint sind, sieht vor, dass
- in einem ersten Schritt (der auch als erste Stufe bezeichnet werden kann) an der (vorgesehenen) Schweißstelle mittels beidseitig der Bauteile angeordneter erster Elektroden ein elektrischer Strom durch die Bauteile geführt und dadurch (zwischen den Bauteilen) eine Punktschweißverbindung erzeugt wird; und
- in einem zweiten Schritt (der auch als zweite Stufe bezeichnet werden kann) an derselben Schweißstelle mittels beidseitig der Bauteile angeordneter zweiter Elektroden ein elektrischer Strom durch die Bauteile geführt und dadurch eine Wärmbehandlung, womit insbesondere eine lokale Wärmebehandlung an der Schweißstelle gemeint ist, vorgenommen bzw. durchgeführt wird.

Die Erfindung sieht vor, dass der erste Schritt mittels erster Elektroden, die insbesondere ein erstes Elektrodenpaar bilden, und der zweite Schritt mittels zweiter Elektroden, die insbesondere ein zweites Elektrodenpaar bilden, ausgeführt wird. Die ersten Elektroden und die zweiten Elektroden sind verschiedene Elektroden bzw. Elektrodenpaare. Bevorzugt werden die Elektroden an der Schweißstelle in gegenüberliegender Position an die Bauteile angelegt bzw. auf die Bauteile aufgesetzt und typischerweise auch mit einer Elektrodenkraft beaufschlagt.

Im ersten Schritt wird in bekannter Weise durch Widerstandserwärmung eine Punktschweißverbindung zwischen den Bauteilen erzeugt, die insbesondere eine Schweißlinse oder bei mehr als zwei Bauteilen gegebenenfalls auch mehrere Schweißlinsen aufweist. Der erste Schritt kann nur eine Bestromungsphase (einzelner Schweißimpuls) oder auch mehrere Bestromungsphasen (mehrere Schweißimpulse), die sich hinsichtlich Stromstärke und Impulsdauer (zeitliche Länge) auch voneinander unterscheiden können, umfassen. Während einer Bestromungsphase kann auch ein variierender Stromverlauf mit einer sich zeitlich verändernden Stromstärke vorgesehen sein.

Im zweiten Schritt erfolgt, ebenfalls durch Widerstandserwärmung, eine Wärmebehandlung der zuvor im ersten Schritt erzeugten Punkteschweißverbindung, die sowohl die eigentliche Punktschweißverbindung bzw. Schweißlinse als auch die umgebenden Bauteilbereiche, die sich insbesondere ringartig um die Punktschweißverbindung bzw. Schweißlinse herum befinden, einschließt. Insbesondere ist vorgesehen, dass sich die Wärmebehandlung auf die (im ersten Schritt erzeugte) Punktschweißverbindung sowie die sogenannte Wärmeeinflusszone (WEZ), d. h. auf den beim Widerstandspunktschweißen (im ersten Schritt) gefügeveränderten Bereich um die Punktschweißverbindung herum, erstreckt. Der zweite Schritt kann nur eine Bestromungsphase (einzelner Wärmebehandlungsimpuls) oder auch mehrere Bestromungsphasen (mehrere Wärmebehandlungsimpulse), die sich hinsichtlich Stromstärke und Impulsdauer auch voneinander unterscheiden können, umfassen. Während einer Bestromungsphase kann auch ein variierender Stromverlauf mit einer sich zeitlich verändernden Stromstärke vorgesehen sein.

Bei der Wärmebehandlung handelt es sich bevorzugt um eine definierte Wärmebehandlung, mit der insbesondere (an der Schweißstelle) ein bestimmter bzw. gewollter Wärmebehandlungseffekt herbeigeführt wird. Für eine definierte Wärmebehandlung geeignete Parameter, wie insbesondere die Stromstärke bzw. der Stromverlauf und die Impulsdauer eines oder mehrerer Wärmebehandlungsimpulse, die Elektrodengeometrie und/oder die Elektrodenkraft (die im Übrigen auch variiert werden kann), können zumindest näherungsweise berechnet, simuliert und/oder durch Versuche (bspw. mithilfe von Schliffbildern und insbesondere einem sogenannten Härte-Mapping) ermittelt werden.

Bevorzugt ist vorgesehen, dass bei der Wärmebehandlung kein Aufschmelzen (mehr) erfolgt bzw. stattfindet, womit insbesondere ein Aufschmelzen der eigentlichen Punktschweißverbindung bzw. Schweißlinse sowie der umgebenden Bauteilbereiche bzw. der Wärmeeinflusszone gemeint ist. (Allenfalls kann ein spontanes punktuelles Anschmelzen des Gefüges auftreten.) Dies kann bspw. dadurch erreicht werden, dass im Vergleich zum Erzeugen der Punktschweißverbindung im ersten Schritt eine niedrigere Stromstärke, eine kürzere Impulsdauer, eine andere Elektrodengeometrie, insbesondere mit größerer Arbeitsfläche und/oder eine andere Elektrodenkraft verwendet wird. Dies gilt analog für mehrere Wärmebehandlungsimpulse, wobei hier auch noch die Pausenzeiten verändert werden können. Zudem kann auch eine vorhandene Elektrodenkühlung gezielt genutzt werden.

Von der Anmelderin durchgeführte Versuche haben ergeben, dass durch die erfindungsgemäß im zweiten Schritt ausgeführte Wärmebehandlung die Verbindungsfestigkeit zwischen den Bauteilen signifikant gesteigert werden kann. Insbesondere ist eine deutliche Erhöhung der Kopfzugkraft bzw. Kopfzugfestigkeit feststellbar. Dies gilt besonders für Bauteile mit martensitbildenden Gefügeeigenschaften und insbesondere für Bauteile mit einem martensitischen Gefüge bzw. einer martensitischen Gefügestruktur (s. u.). Die Verbesserung ist insbesondere darauf zurückzuführen, dass durch die Wärmebehandlung eine gezielte Beeinflussung des Gefüges der Punktschweißverbindung bzw. Schweißlinse sowie der umgebenden Bauteilbereiche bzw. der Wärmeeinflusszone erfolgt, wobei insbesondere Entspannungseffekte und/oder Gefügeumwandlungseffekte auftreten können.

Das erfindungsgemäß vorgesehene zweistufige bzw. -schrittige Verfahren kann zudem taktzeitneutral ausgeführt werden, da das Wärmebehandeln einer zuvor erzeugten Punktschweißverbindung gleichzeitig mit dem Erzeugen einer weiteren Punktschweißverbindung ausgeführt werden kann. Somit ist die Erfindung auch sehr gut für eine Serienfertigung geeignet. Zum einen kann für eine vorgesehene betreffende Bauteilverbindung die Anzahl erforderlicher Schweißpunkte verringert werden. Zum anderen sind Kosten- und/oder Gewichtseinsparungen möglich durch Verwendung von Metallmaterialien bzw. -werkstoffen, mit denen bislang beim Widerstandspunktschweißen keine hohen Verbindungsfestigkeiten erreichbar sind. Das erfindungsgemäße Verfahren eignet sich bevorzugt für den Fahrzeugbau, insbesondere für den Karosseriebau.

Bevorzugt ist vorgesehen, dass die ersten Elektroden und die zweiten Elektroden eine unterschiedliche Elektrodengeometrie aufweisen, insbesondere derart, dass die zweiten Elektroden (im Vergleich zu den ersten Elektroden) mit einer größeren Arbeitsfläche ausgebildet sind.

Der zweite Schritt bzw. die bzw. die Wärmebehandlung kann durchgeführt werden, sobald die Punktschweißverbindung bzw. Schweißlinse erstarrt ist. Der zweite Schritt bzw. die Wärmebehandlung kann bereits ausgeführt werden, bevor die Schweißstelle (nach dem Erzeugen der Punktschweißverbindung im ersten Schritt) vollständig abgekühlt ist. Aus der an der Schweißstelle vorhandenen Restwärme ergeben sich dann für den zweiten Schritt bzw. die Wärmebehandlung energetische Vorteile und/oder Taktzeitvorteile. Zwischen dem ersten Schritt und dem zweiten Schritt kann auch eine längere Abkühlpause vorgesehen sein, in der die Schweißstelle vollständig abkühlt. Zwischen dem ersten Schritt und dem zweiten Schritt kann sowohl eine zeitliche als auch räumliche Entkopplung vorgesehen sein. Bevorzugt ist jedoch vorgesehen, dass der zweite Schritt unmittelbar nach dem ersten Schritt ausgeführt wird. Damit ist insbesondere gemeint, dass der erste Schritt in einem Taktzeitfenster und der zweite Schritt in dem direkt darauffolgenden Taktzeitfenster ausgeführt werden, insbesondere bevor die Schweißstelle vollständig abgekühlt ist.

Für den ersten Schritt, d. h. für das Erzeugen der Punktschweißverbindung, und den zweiten Schritt, d. h. für die Wärmebehandlung, kann eine Doppelschweißzange verwendet werden, an der die ersten Elektroden und die zweiten Elektroden befestigt sind. Eine Doppelschweißzange ist eigentlich dafür vorgesehen, mittels vier Elektroden bzw. zwei Elektrodenpaaren zwei Schweißpunkte in einem Arbeitsgang zu erzeugen. Eine solche Doppelschweißzange kann mit geringfügigen Anpassungen aber auch dazu genutzt werden, im erfindungsgemäßen Sinne mit dem ersten Elektrodenpaar eine Punktschweißverbindung zu erzeugen und dann (nach einer Verfahrbewegung) mit dem zweiten Elektrodenpaar die Punktschweißverbindung wärmezubehandeln (wie vorausgehend erläutert), wobei mit dem ersten Elektrodenpaar bereits eine weitere Punktschweißverbindung erzeugt werden kann. Bevorzugt sind die ersten Elektroden und die zweiten Elektroden unabhängig voneinander bestrombar. Bevorzugt ist die Doppelschweißzange an einem Roboterarm (eines Schweißroboters oder dergleichen) befestigt, sodass das erfindungsgemäße Verfahren mit nur einem Schweißroboter ausgeführt werden kann.

Bei den zu verschweißenden Bauteilen handelt es sich insbesondere um Stahlbauteile. Wenigstens eines der Bauteile kann martensitbildende Gefügeeigenschaften aufweisen. Bevorzugt ist vorgesehen, dass wenigstens eines der Bauteile (zumindest an der Schweißstelle) ein martensitisches Gefüge bzw. eine martensitische Gefügestruktur, vorzugsweise ein vollmartensitisches Gefüge bzw. eine vollmartensitische Gefügestruktur, aufweist und insbesondere ein pressgehärtetes Blechformteil oder ein Blechformteil aus Dualphasenstahl ist. Vorzugsweise haben alle Bauteile martensitbildende Gefügeeigenschaften oder ein martensitisches/vollmartensitisches Gefüge bzw. eine martensitische/vollmartensitische Gefügestruktur und sind insbesondere pressgehärtete Blechformteile und/oder Blechformteile aus Dualphasenstahl.

Bevorzugt ist bei der im zweiten Schritt vorgenommenen Wärmebehandlung die Temperatur, womit die lokale Temperatur an der Schweißstelle gemeint ist, niedriger als die AC1-Temperatur der Bauteile oder zumindest eines der Bauteile. Das nach dem Schweißvorgang des ersten Schritts in einer Wärmeeinflusszone vorhandene Gefüge wird somit nicht umgewandelt, sondern mehr oder weniger angelassen, wodurch insbesondere Spannungen abgebaut und die Duktilität verbessert werden. Selbiges gilt bevorzugt auch für die Punktschweißverbindung bzw. Schweißlinse. Bei der im zweiten Schritt vorgenommenen Wärmbehandlung kann die (lokale) Temperatur auch höher als die AC1-Temperatur und niedriger als die AC3-Temperatur der Bauteile oder zumindest eines der Bauteile sein. Dies ermöglicht eine teilweise Gefügeumwandlung des nach dem Schweißvorgang des ersten Schritts in einer Wärmeeinflusszone vorhandenen Gefüges, gegebenenfalls in Verbindung mit einem Anlasseffekt. Selbiges gilt bevorzugt auch für die Punktschweißverbindung bzw. Schweißlinse. Bei der im zweiten Schritt vorgenommenen Wärmbehandlung kann die (lokale) Temperatur auch gleich oder höher als die AC3-Temperatur, insbesondere jedoch niedriger als die Schmelztemperatur, der Bauteile oder zumindest eines der Bauteile sein. Dies ermöglicht eine vollständige Gefügeumwandlung des nach dem Schweißvorgang des ersten Schritts in einer Wärmeeinflusszone vorhandenen Gefüges. Selbiges gilt bevorzugt auch für die Punktschweißverbindung bzw. Schweißlinse. In jedem Fall ist eine signifikante Verbesserung der Verbindungsfestigkeit, insbesondere der Kopfzugkraft bzw. Kopfzugfestigkeit, erreichbar.

Bei der teilweisen oder vollständigen Gefügeumwandlung (s. o.) handelt es sich insbesondere um eine definierte Gefügeumwandlung in ein bestimmtes Gefüge, bspw. in ein ferritisches, bainitisches und/oder martensitisches, insbesondere neumartensitisches, Gefüge. Falls die zweiten Elektroden eine Elektrodenkühlung aufweisen, kann auch diese zur Einstellung eines bestimmten Gefüges bzw. Mischgefüges genutzt werden. Für die im zweiten Schritt vorgenommene Wärmebehandlung kann auch eine Temperaturüberwachung oder -regelung vorgesehen sein. Die Wärmebehandlung kann auch über die Wärmeeinflusszone hinausgehen, d. h., die von der Wärmebehandlung des zweiten Schritts erfassten Bauteilbereiche können geringfügig größer sein als eine im ersten Schritt bzw. beim Erzeugen der Punktschweißverbindung entstandene Wärmeeinflusszone.

Die Elektroden können Elektrodenkappen aufweisen, wie aus dem Stand der Technik grundsätzlich bekannt. Die vorausgehenden und nachfolgenden Erläuterungen gelten analog für Elektroden mit Elektrodenkappen und Elektroden ohne Elektrodenkappen.

Bei den zum Erzeugen der Punktschweißverbindung im ersten Schritt verwendeten ersten Elektroden handelt es sich bevorzugt um sogenannte Typ-F-Elektroden bzw. um Elektroden mit einer Typ-F-Kappe. Elektrodenkappen zum Widerstandspunktschweißen sind in der DIN EN ISO 5821 (ehemals DIN 44750) in unterschiedliche Typen eingeteilt, die sich hinsichtlich der Form bzw. Elektrodengeometrie unterscheiden. Typ-F-Elektroden bzw. -Kappen weisen eine Kugelform, gegebenenfalls auch mit einer Abflachung, auf, d. h., die Arbeitsfläche ist kugelförmig und gegebenenfalls mit einer stirnseitigen Flachstelle ausgebildet. Bei den zur Wärmbehandlung im zweiten Schritt verwendeten zweiten Elektroden handelt es sich bevorzugt um sogenannte Typ-C-Elektroden bzw. um Elektroden mit einer Typ-C-Kappe. Typ-C-Elektroden bzw. -Kappen weisen eine zylindrische Form mit einer flachen und kreisförmigen Stirn- bzw. Arbeitsfläche auf.

Bei den zweiten Elektroden kann es sich auch um ringförmige Elektroden bzw. um Elektroden mit einer ringförmigen Kappe handeln, womit gemeint ist, dass diese zumindest eine ringförmige bzw. kreisringförmige Arbeitsfläche aufweisen. Bei Einsatz solcher ringförmigen bzw. ringartigen zweiten Elektroden können diese so verwendet werden, dass deren ring- bzw. kreisringförmigen Arbeitsflächen quasi um die zuvor erzeugte Punktschweißverbindung bzw. Schweißlinse herum mit den Bauteilen in Kontakt gebracht werden, um zur vorrangigen Wärmebehandlung einer beim vorausgehenden Widerstandspunktschweißen entstandenen Wärmeinflusszone einen gezielten Stromfluss (durch die Wärmeinflusszone) zu erreichen oder zumindest zu begünstigen.

Die Erfindung wird nachfolgend beispielhaft und in nicht einschränkender Weise mit Bezug auf die Figuren näher erläutert. Die in den Figuren gezeigten und/oder nachfolgend erläuterten Merkmale können, auch unabhängig von bestimmten Merkmalskombinationen, allgemeine Merkmale der Erfindung sein und die Erfindung weiterbilden.
- Fig. 1: veranschaulicht schematisch eine erste Ausführungsmöglichkeit des erfindungsgemäßen Verfahrens.
- Fig. 2: veranschaulicht analog zur Fig. 1 eine zweite Ausführungsmöglichkeit des erfindungsgemäßen Verfahrens.

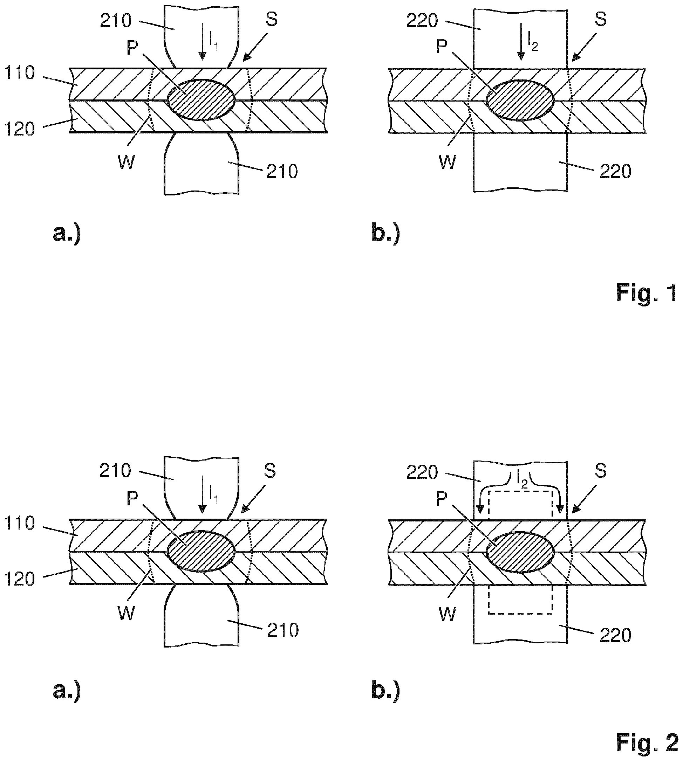

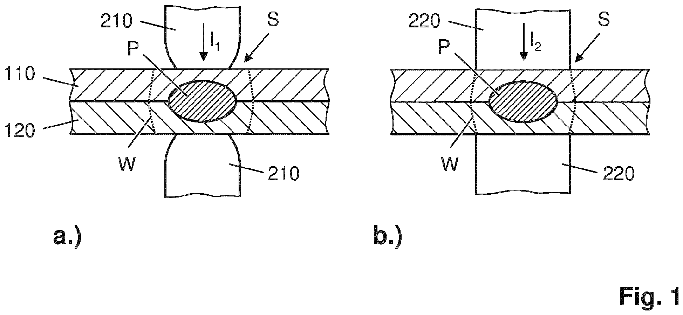

Fig. 1a zeigt den ersten Schritt (erste Stufe) des erfindungsgemäßen Verfahrens, bei dem die Bauteile 110, 120 an einer Schweißstelle S durch Widerstandspunktschweißen gefügt werden. Mittels beidseitig der Bauteile 110, 120 angeordneter erster Elektroden 210 wird ein elektrischer Strom I₁ durch die Bauteile 110, 120 geführt und dadurch eine Punktschweißverbindung P in Form einer Schweißlinse erzeugt. Die ersten Elektroden 210 sind bevorzugt als Typ-F-Elektroden ausgebildet, deren durch stirnseitige Abflachung gebildeten Arbeitsflächen bspw. einen Durchmesser von 4 mm bis 8 mm aufweisen können. Beim Widerstandspunktschweißen entsteht um die Punktschweißverbindung P herum eine Wärmeeinflusszone W.

Fig. 1b zeigt den zweiten Schritt (zweite Stufe) des erfindungsgemäßen Verfahrens, bei dem an derselben Schweißstelle S mittels beidseitig der Bauteile 110, 120 angeordneter zweiter Elektroden 220 ein elektrischer Strom I₂ durch die Bauteile 110, 120 geführt und dadurch eine Wärmbehandlung, insbesondere eine definierte Wärmebehandlung, vorgenommen wird. Durch diese Wärmebehandlung erfolgt eine gezielte Beeinflussung des Gefüges der Punktschweißverbindung P sowie der Wärmeeinflusszone W, wie obenstehend näher erläutert. Bevorzugt werden die zweiten Elektroden 220 konzentrisch zur Position der ersten Elektroden 210 und somit im Wesentlichen auch konzentrisch zur Punktschweißverbindung P aufgesetzt. Die zweiten Elektroden 210 sind bevorzugt als Typ-C-Elektroden ausgebildet, deren Arbeitsflächen bspw. einen Durchmesser von 18 mm bis 22 mm aufweisen können. Durch die vergleichsweise großen Arbeitsflächen kann im Bereich der Punktschweißverbindung P und der Wärmeeinflusszone W eine gleichmäßige Erwärmung erreicht werden.

Die in Fig. 2 veranschaulichte Ausführungsmöglichkeit unterscheidet sich zur Ausführungsmöglichkeit der Fig. 1 im Wesentlichen dadurch, dass die zweiten Elektroden 220 ringförmig bzw. ringartig ausgebildet sind. Bevorzugt handelt es sich um Typ-C-Elektroden bzw. -Kappen mit stirnseitiger Bohrung. Durch die ringförmige bzw. kreisringförmige Arbeitsfläche dieser Elektroden 220 wird ein Stromfluss um die Punktschweißverbindung P herum begünstigt, um eine vorrangige Wärmebehandlung der Wärmeinflusszone W zu erreichen.

Weitere Ausgestaltungs- und Ausführungsmöglichkeiten der Erfindung sind oben beschrieben.

### Bezugszeichenliste

- 110: Bauteil
- 120: Bauteil
- 210: erste Elektrode(n)
- 220: zweite Elektrode(n)
- I₁: elektrischer Strom
- I₂: elektrischer Strom
- P: Punktschweißverbindung
- S: Schweißstelle
- W: Wärmeeinflusszone

## Patentansprüche

1. Verfahren zum Widerstandspunktschweißen von Bauteilen (110, 120), wobei
- in einem ersten Schritt an der Schweißstelle (S) mittels beidseitig der Bauteile (110, 120) angeordneter erster Elektroden (210) ein elektrischer Strom (I₁) durch die Bauteile (110, 120) geführt und dadurch eine Punktschweißverbindung (P) erzeugt wird; und
- in einem zweiten Schritt an derselben Schweißstelle (S) mittels beidseitig der Bauteile (110, 120) angeordneter zweiter Elektroden (220) ein elektrischer Strom (I₂) durch die Bauteile (110, 120) geführt und dadurch eine Wärmbehandlung vorgenommen wird.

2. Verfahren nach Anspruch 1,
**dadurch gekennzeichnet, dass**
die ersten Elektroden (210) und die zweiten Elektroden (220) eine unterschiedliche Elektrodengeometrie aufweisen, insbesondere derart, dass die zweiten Elektroden (220) eine größere Arbeitsfläche aufweisen.

3. Verfahren nach einem der vorhergehenden Ansprüche,
**dadurch gekennzeichnet, dass**
der zweite Schritt unmittelbar nach dem ersten Schritt ausgeführt wird.

4. Verfahren nach einem der vorhergehenden Ansprüche, insbesondere nach Anspruch 3,
**dadurch gekennzeichnet, dass**
für den ersten Schritt und den zweiten Schritt eine Doppelschweißzange verwendet wird, an der die ersten Elektroden (210) und die zweiten Elektroden (220) befestigt sind.

5. Verfahren nach einem der vorhergehenden Ansprüche,
**dadurch gekennzeichnet, dass**
wenigstens eines der Bauteile (110, 120) ein martensitisches Gefüge aufweist.

6. Verfahren nach einem der vorhergehenden Ansprüche 1 bis 5,
**dadurch gekennzeichnet, dass**
bei der im zweiten Schritt vorgenommenen Wärmbehandlung die Temperatur niedriger als die AC1-Temperatur der Bauteile (110, 120) ist.

7. Verfahren nach einem der vorhergehenden Ansprüche 1 bis 5,
**dadurch gekennzeichnet, dass**
bei der im zweiten Schritt vorgenommenen Wärmbehandlung die Temperatur höher als die AC1-Temperatur und niedriger als die AC3-Temperatur der Bauteile (110, 120) ist.

8. Verfahren nach einem der vorhergehenden Ansprüche 1 bis 5,
**dadurch gekennzeichnet, dass**
bei der im zweiten Schritt vorgenommenen Wärmbehandlung die Temperatur gleich oder höher als die AC3-Temperatur der Bauteile (110, 120) ist.

9. Verfahren nach einem der vorhergehenden Ansprüche,
**dadurch gekennzeichnet, dass**
es sich bei den im ersten Schritt verwendeten ersten Elektroden (210) um Typ-F-Elektroden handelt.

10. Verfahren nach einem der vorhergehenden Ansprüche,
**dadurch gekennzeichnet, dass**
es sich bei den im zweiten Schritt verwendeten zweiten Elektroden (220) um Typ-C-Elektroden oder um ringförmige Elektroden handelt.
